# FASCICULE DE BREVET EUROPEEN

(11) **EP 0 984 853 B1**
(45) Date de publication et mention de la délivrance du brevet: **20.02.2002**
(21) Numéro de dépôt: 98928382.5
(22) Date de dépôt: 28.05.1998
(51) Int. Cl.: B29C 73/10, B29C 73/32

(54) **OUTILLAGE DE REPARATION SUR SITE D'UNE STRUCTURE COMPOSITE PRESENTANT UNE ZONE ENDOMMAGEE ET PROCEDE CORRESPONDANT**
GERÄT FÜR IN-SITU-REPARATUR EINER VERBUNDMATERIALSTRUKTUR MIT BESCHÄDIGTER STELLEN UND VERFAHREN HIERZU
EQUIPMENT FOR ON-SITE REPAIR OF A COMPOSITE STRUCTURE WITH A DAMAGED ZONE AND CORRESPONDING METHOD

(30) Priorité: 29.05.1997 FR 9706602
(43) Date de publication de la demande: 15.03.2000
(73) Titulaire: AEROSPATIALE Société Nationale Industrielle, 75781 Paris Cédex 16 (FR)
(72) Inventeur: KOCIEMBA, Fabienne, F-92500 Rueil Malmaison (FR); SORO, Daniel, F-93800 Epinay sur Seine (FR)
(74) Mandataire: Poulin, Gérard
(86) Numéro de dépôt international: FR9801075
(87) Numéro de publication internationale: WO9853982

(56) Documents cités:
- EP-A- 0 180 865
- FR-A- 2 705 914
- US-A- 4 808 253
- US-A- 5 442 156
- SAM DASTIN (GRUMMAN CORP.): "REPAIRING ADVANCED COMPOSITE MATERIALS" MACHINE DESIGN, vol. 58, no. 4, février 1986, pages 86-90, XP002029723 CLEVELAND, OH, U.S.A.

## Description

### Domaine technique

L'invention concerne un outillage conçu pour permettre la réparation d'une structure composite présentant une zone endommagée, sans qu'il soit nécessaire de déplacer cette structure jusqu'à un lieu de réparation distinct de l'emplacement où elle se trouve.

L'expression "structure composite" désigne ici, comme dans la suite du texte, une structure formée de fibres longues, telles que des fibres de carbone ou autres, disposées sous la forme de nappes ou "plis" superposés, et noyées dans une matrice de résine.

L'invention concerne également un procédé permettant de réparer une structure composite en mettant en oeuvre un tel outillage.

L'outillage et le procédé selon l'invention peuvent être utilisés dans tous les cas où le retour de la structure dans un atelier spécialisé et son passage dans un autoclave ne sont pas possibles ou trop pénalisants. Ainsi, une application privilégiée de l'outillage et du procédé conformes à l'invention concerne la réparation des structures composites utilisées sur les aéronefs.

### Etat de la technique

Les matériaux composites permettent d'obtenir des caractéristiques mécaniques parfaitement contrôlées et de niveau comparable à celles des métaux, pour un poids moindre. De plus, les techniques de fabrication de ces matériaux se perfectionnent régulièrement, aussi bien en ce qui concerne les formes et les dimensions des pièces qu'en ce qui concerne le temps et le coût de la fabrication. Pour ces différentes raisons, la part des structures composites dans les aéronefs augmente régulièrement.

Par rapport aux structures métalliques, les structures composites ont toutefois pour inconvénient d'être plus fragiles lorsqu'elles sont soumises à des chocs. Ainsi, lorsqu'une structure composite est heurtée violemment par un objet, il se produit une cassure ou une fissuration plus ou moins importante dans la zone d'impact. La part croissante prise par les structures composites dans les aéronefs a donc conduit à la mise au point de techniques de réparation de ces structures.

L'évaluation de la qualité d'une réparation effectuée sur une structure composite d'aéronef doit prendre en compte deux critères qui sont l'aspect de la zone réparée et les caractéristiques mécaniques de la structure dans cette zone. En outre, il est essentiel que la réparation puisse être effectuée directement sur site, à l'endroit où l'aéronef se trouve, afin de réduire les coûts et de limiter la durée d'immobilisation au strict minimum. Cette dernière contrainte interdit en pratique l'utilisation d'autoclaves.

Le critère esthétique est un critère important, du fait que la zone endommagée est, par hypothèse, située à l'extérieur de l'aéronef, c'est-à-dire dans une zone visible. Il est donc souhaitable que la zone réparée présente un aspect comparable à celle que présentait la structure composite avant d'être endommagée, afin d'être pratiquement invisible.

Par ailleurs, l'obtention de caractéristiques mécaniques aussi proches que possible de celles présentées initialement par la structure composite avant d'être endommagée est d'autant plus souhaitable que les dimensions de la zone endommagée augmentent.

Il existe actuellement un certain nombre d'appareils permettant d'effectuer des réparations de structures composites sur place, lorsque la zone endommagée est de dimensions réduites. Ces appareils comprennent des outillages permettant d'usiner un évidement en escalier ("step machining") ou en biseau ("scarf machining") dans la zone endommagée de la structure composite et des outillages permettant de polymériser avec compactage une pièce composite placée dans l'évidement.

Les documents US-A-5 207 541 et US-A-5 271 145 concernent des outillages d'usinage. De tels outillages permettent d'usiner des évidements qui présentent généralement une forme circulaire ou ovale. D'autres formes sont toutefois possible, comme l'illustrent notamment les documents US-A-4 916 880 et US-A-4 978 404.

La pièce composite placée dans l'évidement ainsi usiné présente une forme complémentaire de celle de l'évidement. Elle se compose généralement de plusieurs couches ou "plis" de tissu de fibres longues et d'une résine non polymérisée. Selon le cas, le tissu est préimprégné de résine ou initialement sec. Dans ce dernier cas, la résine peut être déposée sous forme liquide sur chaque couche de tissu ou sous la forme d'un film solide interposé entre les différentes couches de tissu sec.

Habituellement, l'outillage permettant d'effectuer la polymérisation et le compactage de la pièce composite comprend principalement une couverture chauffante permettant d'élever la résine à sa température de polymérisation, et une vessie appliquée de façon étanche sur la surface de la structure composite, autour de la pièce composite. La vessie est reliée à une source extérieure de vide, de façon à appliquer une pression sur la pièce composite.

Dans cet outillage classique, illustré notamment par le document US-A-4 554 036, la pression appliquée sur la pièce composite reste très faible (par exemple, environ 1,5 bars).

L'utilisation d'un tel outillage permet donc de réaliser des réparations "cosmétiques", c'est-à-dire de reconstituer l'aspect de la structure composite d'origine, avec des caractéristiques mécaniques très dégradées dans la zone réparée, puisque ces caractéristiques peuvent être inférieures jusqu'à 30 % des caractéristiques présentées par la structure dans son état d'origine. Les réparations effectuées selon cette technique sont donc nécessairement limitées à des dommages de petites dimensions.

Lorsque la zone endommagée est plus grande, la pratique la plus couramment utilisée consiste à remplacer totalement la structure composite endommagée et à l'envoyer en réparation dans un atelier spécialisé, équipé d'autoclaves permettant d'effectuer la polymérisation sous pression dans des conditions satisfaisantes.

Selon une autre technique connue, on fabrique, par moulage dans un autoclave, une pièce composite présentant une forme complémentaire de celle de l'évidement préalablement usiné dans la zone endommagée. La pièce composite est alors polymérisée et compactée en autoclave, avant d'être mise en place dans l'évidement par collage. Cette technique est illustrée notamment par le document US-A-5 023 987.

Cette technique a pour inconvénient notable que la tenue en fatigue dans la zone de collage est relativement limitée, ce qui constitue un inconvénient important notamment dans l'industrie aéronautique. Pour cette raison, la fixation de la pièce composite rapportée sur la structure est généralement complétée par des moyens de fixation complémentaires tels que des boulons ou des rivets et nécessite un accès sur la face arrière de la structure. La réparation est donc visible de l'extérieur et ne répond pas à l'exigence esthétique préalablement mentionnée.

Par ailleurs, la fabrication de la pièce composite polymérisée s'effectue dans un autoclave, c'est-à-dire généralement sur un site différent de celui sur lequel se trouve l'aéronef. Cela implique une immobilisation longue et coûteuse de celui-ci.

L'article "Repaired advanced composite material" de Sam Dastin, publié dans le magazine Machine Design de février 1986, aux pages 86-90, décrit un outillage de réparation sur site d'une structure composite, conforme au préambule de la revendication 1.

### Exposé de l'invention

L'invention a principalement pour objet un outillage permettant d'effectuer la réparation sur site d'une structure composite présentant une zone endommagée, en assurant le respect de l'esthétique de la structure composite d'origine et en garantissant des caractéristiques mécaniques relativement proches de celles présentées par la structure non endommagée, ce qui autorise notamment la réparation sur site de dommages de relativement grandes dimensions.

Conformément à l'invention, ce résultat est obtenu au moyen d'un outillage de réparation sur site d'une structure composite présentant un évidement concave, préalablement usiné dans une surface de la structure, pour la polymérisation sous pression d'une pièce composite non polymérisée, de forme complémentaire de celle de l'évidement, cet outillage comprenant :
- une vessie apte à être appliquée de façon étanche sur la surface de la structure composite, autour de ladite pièce composite ;
- un moyen pour relier la vessie à une source extérieure de vide ; et
- des moyens de chauffage de la pièce composite ;
ledit outillage étant caractérisé en ce qu'il comprend, de plus, des moyens multiplicateurs de la pression appliquée sur la pièce composite, aptes à être interposés entre celle-ci et la vessie étanche.

Dans une forme de réalisation préférée de l'invention, les moyens multiplicateurs de pression comprennent un empilement d'au moins deux plaques présentant des surfaces qui augmentent progressivement en allant vers la vessie.

Par exemple, les surfaces des plaques les plus éloignées de l'empilement sont dans un rapport d'au moins environ un sur deux.

Pour tenir compte du fait que la surface d'une structure composite d'aéronef n'est généralement pas plane, les plaques sont de préférence des clinquants plans, déformables élastiquement pour se conformer à la surface de la structure composite.

Afin d'assurer le maintien des plaques dans une position centrée l'une par rapport à l'autre lorsque la pression est appliquée par la mise sous vide de la vessie, des moyens de guidage relatif des plaques sont prévus.

Ces moyens de guidage peuvent notamment comprendre au moins un pion de guidage faisant saillie sur au moins l'une des plaques, perpendiculairement à celle-ci, au travers de trous de guidage formés dans les autres plaques.

La plaque la plus proche de la pièce composite présente de préférence une surface et une forme sensiblement identiques à celles de la pièce composite, au niveau de la surface de la structure.

Selon une caractéristique connue en elle-même, les moyens de chauffage comprennent une couverture chauffante, interposée dans ce cas entre la vessie et les moyens multiplicateurs de pression.

L'invention a également pour objet un procédé de réparation sur site d'une structure composite présentant une zone endommagée, ledit procédé comprenant les étapes suivantes :
- usinage d'un évidement concave dans la zone endommagée à partir d'une surface de la structure ;
- montage dans l'évidement d'une pièce composite non polymérisée, de forme complémentaire de celui-ci ;
- polymérisation in situ de la pièce composite, par mise sous vide d'une vessie appliquée de façon étanche sur ladite surface de la structure composite, autour de la pièce composite, après interposition de moyens multiplicateurs de la pression appliquée sur la pièce composite, entre celle-ci et la vessie, et chauffage de la pièce composite.

### Brève description des dessins

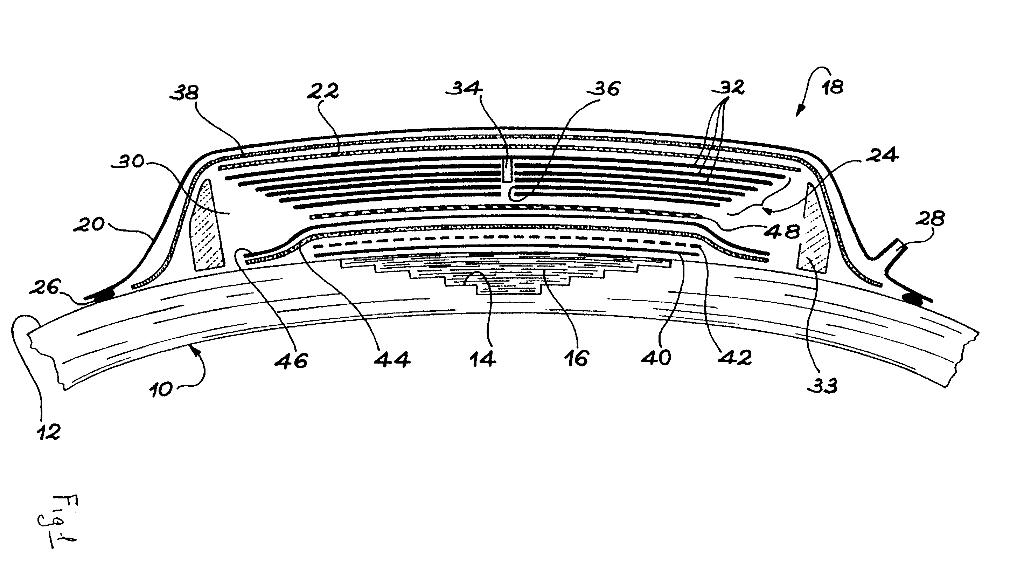

On décrira à présent, à titre d'exemple non limitatif, une forme de réalisation préférée de l'invention, en se référant au dessin annexé, dans lequel la figure unique représente schématiquement, en coupe partielle, un outillage de réparation sur site conforme à l'invention, placé sur une structure composite présentant une zone endommagée.

### Exposé détaillé d'une forme de réalisation préférentielle de l'invention

Sur la figure unique, la référence 10 désigne de façon générale une structure composite telle qu'une structure d'aéronef. La surface extérieure 12 de cette structure composite 10 présente un évidement concave 14, préalablement usiné à l'aide d'un outillage connu qui ne fait pas partie de l'invention.

L'évidement 14 a été usiné dans une zone endommagée de la structure composite 10, que l'on désire réparer sur place. En vue de dessus, cet évidement 14 présente généralement une forme circulaire. Lorsque la forme de la zone endommagée le justifie, l'évidement 14 peut toutefois présenter une forme différente et notamment ovale.

Par ailleurs, l'évidement 14 est réalisé soit en escalier, comme l'illustre la figure, soit en biseau, selon des techniques connues. La réalisation d'un évidement 14 usiné en biseau est préférée, car elle permet d'obtenir dans la zone réparée, des caractéristiques mécaniques supérieures à celles que l'on obtient à partir d'un évidement en escalier.

Après avoir usiné l'évidement 14, on place dans celui-ci une pièce composite 16 présentant une forme complémentaire de celle de l'évidement. Il est important d'observer que l'expression "pièce composite" ne désigne pas ici une pièce préalablement polymérisée, mais au contraire un ensemble non polymérisé formé de fibres longues, par exemple de carbone, et d'un adhésif tel qu'une résine époxy additionnée d'un plastifiant. Par conséquent, la pièce composite 16 peut être fabriquée directement sur place, sans qu'il soit nécessaire d'avoir recours à un autoclave.

Dans la pratique et selon des techniques connues par ailleurs, la pièce composite 16 peut être fabriquée soit en découpant et en superposant des tissus préimprégnés de résine, soit en découpant et en superposant des tissus secs, en prenant soin de les imprégner de résine liquide au fur et à mesure de leur mise en place, soit encore en découpant et en superposant alternativement des tissus secs et des films solides d'adhésif. L'utilisation de cette dernière technique est préférée, en raison de sa facilité de mise en oeuvre et de la qualité des résultats qu'elle permet d'obtenir.

Conformément à l'invention, la pièce composite 16 placée dans l'évidement 14 est polymérisée sous pression, sur le site dans lequel se trouve la structure composite 10, au moyen d'un outillage de réparation désigné de façon générale par la référence 18.

L'outillage de réparation 18 comprend principalement une vessie étanche 20, des moyens 22 de chauffage de la pièce composite 16 et des moyens 24 multiplicateurs de la pression appliquée sur cette pièce.

La vessie étanche 20 présente des dimensions sensiblement supérieures à celles de la pièce composite 16, de telle sorte que son rebord périphérique puisse être appliqué de façon étanche sur la surface extérieure 12 de la structure composite 10, autour de la pièce composite 16 par l'intermédiaire d'un mastic d'étanchéité 26.

La vessie étanche 20 est équipée d'une valve 28 constituant un moyen pour relier la vessie à une source extérieure de vide (non représentée). Cet agencement est classique, de telle sorte qu'aucune autre description n'en sera faite.

Les moyens 22 de chauffage de la pièce composite 16 sont constitués dans ce cas par une couverture chauffante reliée à une source de courant extérieure (non représentée) par des conducteurs électriques (non représentés). La couverture chauffante constituant les moyens 22 de chauffage de la pièce composite 16 est interposée entre la vessie 20 et les moyens 24 multiplicateurs de pression.

Les moyens 24 multiplicateurs de pression constituent la caractéristique essentielle de l'invention. Ils sont interposés entre la vessie 20 et la pièce composite 16, de façon à permettre une multiplication de l'effort appliqué sur cette dernière lors de la mise sous vide de l'espace 30 emprisonné entre la structure composite 10 et la vessie étanche 20.

Dans la forme de réalisation préférée de l'invention illustrée sur la figure unique, les moyens 24 multiplicateurs de pression comprennent un empilement de plaques 32 dont les surfaces augmentent progressivement en allant vers la vessie 20. De façon plus précise, la plaque 32 la plus proche de la pièce composite 16 présente une surface et une forme sensiblement identiques à celles présentées par la pièce composite 16, au niveau de la surface extérieure 12 de la structure composite 10. Dans la pratique, on donne généralement à la plaque 32 la plus proche de la pièce 16 une surface légèrement supérieure à celle de la pièce 16 au niveau de la surface 12.

De plus, la plaque 32 la plus proche de la pièce composite 16 est centrée sur celle-ci, de façon à la recouvrir en totalité.

Par ailleurs, la plaque 32 la plus proche de la vessie 20 présente une surface qui est par exemple au moins environ double de celle de la plaque 32 la plus proche de la pièce composite 16. Par conséquent, la pression appliquée sur la pièce composite 16 par la plaque 32 la plus proche de cette pièce est sensiblement double de la pression appliquée par la vessie étanche 20 sur la plaque 32 la plus éloignée de la pièce composite, lorsqu'un vide est créé dans l'espace 30.

Etant donné que le niveau de vide atteint dans l'espace 30 est généralement d'environ 0,7 à 0,9 bars dans le cas des sources de vide primaires utilisées habituellement dans cette application, l'ajout des moyens 24 multiplicateurs de pression permet d'appliquer sur la pièce composite 16 une pression au moins environ double de celle qui est appliquée avec les outillages classiques. Ainsi, et uniquement à titre d'exemple, avec un vide de 0,9 bars dans l'espace 30, et un rapport de surfaces de 3,75 une pression d'environ 3 bars peut être appliquée sur la pièce composite 16.

Il est à noter que le facteur multiplicateur de pression dépend du rapport des surfaces entre les plaques les plus éloignées de l'empilement de plaques 32, de sorte qu'il peut être sensiblement différent de trois, sans sortir du cadre de l'invention.

Le nombre des plaques 32 constituant l'empilement peut être égal à deux, et ces plaques peuvent être rigides lorsque la surface extérieure 12 de la structure composite 10 est plane ou présente une courbure continue de valeur connue.

Dans le cas d'un outillage destiné à réparer les structures composites des aéronefs, la surface extérieure de ces structures n'est généralement pas plane et peut présenter des courbures variables. On utilise alors, de préférence, des moyens 24 multiplicateurs de pression dans lesquels les plaques 32 sont constituées par un nombre relativement important de clinquants plans, déformables élastiquement de façon à pouvoir se conformer à la surface 12 de la structure composite à réparer.

Afin d'éviter un glissement relatif des plaques 32 les unes par rapport aux autres lors de la mise sous vide de l'espace 30, des moyens de guidage relatif de ces plaques sont de préférence prévus.

Dans la forme de réalisation illustrée sur la figure unique, ces moyens de guidage relatif comprennent un pion de guidage 34 qui fait saillie sur au moins l'une des plaques 32, perpendiculairement à celle-ci, au travers de trous de guidage 36 formés dans les autres plaques 32. Dans l'exemple représenté, le pion de guidage 34 est fixé sur la plaque 32 la plus proche de la vessie 20, au centre de cette plaque, et les trous de guidage 36 sont formés au centre des autres plaques 32. Il est à noter que d'autres agencements sont possibles, plusieurs pions de guidage 34 fixés sur une même plaque 32 ou sur des plaques différentes pouvant notamment être prévus.

La longueur du ou des pions de guidage 34 est conçue pour permettre le guidage de toutes les autres plaques 32, sans pour autant que le ou les pions fassent saillie au-delà de l'empilement de plaques. La longueur du ou des pions 34 est donc légèrement inférieure à l'épaisseur cumulée des plaques 32 qui ne portent pas ces pions.

Sur la figure unique, les plaques 32 ont été illustrées volontairement espacées les unes des autres, pour faciliter la lecture. C'est pourquoi le pion 34 ne traverse que certaines des plaques 32.

Il est à noter qu'en variante, les moyens de guidage relatif des plaques 32 peuvent prendre des formes différentes.

Un fourreau de guidage 33, placé autour de l'empilement de plaques 32, empêche la vessie 20 de se coincer sous l'empilement ou entre deux plaques, lors de la mise sous vide de l'espace 30.

Dans le cas déjà mentionné ou seules deux plaques 32 sont utilisées, le fourreau de guidage 33, interposé entre la structure composite 10 et la vessie, autour de l'empilement de plaques, peut assurer lui-même le guidage relatif des plaques 32.

L'outillage de réparation 18 conforme à l'invention comprend par ailleurs tous les éléments qui équipent habituellement les outillages de l'art antérieur. Ces différents éléments vont être à présent brièvement décrits en se référant à la figure.

Un tissu de drainage 38, dont les dimensions sont sensiblement supérieures à celles de la couverture chauffante 22, est interposé entre cette dernière et la vessie étanche 20. Ce tissu de drainage 38 a pour fonction de permettre une évacuation complète de l'air lors de la mise sous vide de l'espace 30.

Tous les autres éléments de l'outillage de réparation 18 sont placés entre la pièce composite 16 et les moyens 24 multiplicateurs de pression. Ces différents éléments comprennent, en partant de la pièce composite 16, un tissu de démoulage 40, un film 42 de matière plastique perforé, un tissu de drainage 44, un film étanche 46 et un film de Mosite 48.

Le tissu de démoulage 40 facilite la séparation de l'outillage 18 et de la pièce 16 lorsque la polymérisation est terminée.

En association avec le tissu de drainage 44 et le film étanche 46, le film perforé 42 assure l'évacuation de l'air et de l'excédent de résine vers la périphérie, lors de la mise sous vide de l'espace 30.

Enfin, le film de Mosite 48, facultatif, assure une bonne répartition de la pression appliquée sur la pièce composite 16 au travers des moyens 24 multiplicateurs de pression.

Lorsqu'on désire réparer une structure composite 10 présentant une zone endommagée, on usine d'abord un évidement concave 14 dans la structure 10, afin d'en supprimer toutes les parties endommagées.

Si le dommage traverse toute l'épaisseur de la structure composite 10, l'évidement 14 est traversant. Un bouchon composite de faible épaisseur est alors collé dans la partie de fond de l'évidement, avant que les opérations suivantes soient mises en oeuvre.

On place ensuite dans l'évidement 14 la pièce composite 16 non polymérisée, comme on l'a décrit précédemment.

On met ensuite en place l'outillage de réparation 18 qui vient d'être décrit, en raccordant la valve 28 à la source extérieure de vide et en reliant la couverture chauffante 22 à la source de courant extérieur.

Lorsque la pièce 16 est chauffée à l'aide de la couverture chauffante 22 et mise sous pression par la mise sous vide de l'espace 30, l'adhésif contenu dans la pièce composite 16 est polymérisé sous pression. Plus précisément, une pression par exemple d'environ 3 bars est appliquée sur la pièce composite 16, grâce à l'action amplificatrice des moyens 24 multiplicateurs de pression.

Lorsque la polymérisation est terminée, le chauffage est stoppé et l'espace 30 est relié à l'atmosphère extérieure. L'outillage de réparation 18 peut alors être démonté.

Des essais effectués à l'aide d'un tel outillage ont montré que l'aspect extérieur de la surface 12 est préservé dans la zone réparée et que les caractéristiques mécaniques de la structure dans cette zone sont respectivement égales à 79 % et 89 % de celles de la structure initiale, selon que l'on utilise un évidement 14 en escalier ou en biseau. Les caractéristiques mécaniques dans la zone réparée sont donc très supérieures à celles qui sont obtenues selon la technique antérieure, ce qui permet d'envisager des réparations de plus grande ampleur, qui n'étaient pas effectuées auparavant.

## Revendications

1. Outillage de réparation (18) sur site d'une structure composite (10) présentant un évidement concave (14), préalablement usiné dans une surface (12) de la structure (10), pour la polymérisation sous pression d'une pièce composite (16) non polymérisée, de forme complémentaire de celle de l'évidement (14), cet outillage comprenant :
- une vessie (20) apte à être appliquée de façon étanche sur la surface (12) de la structure composite (10), autour de ladite pièce composite (16) ;
- un moyen (28) pour relier la vessie (20) à une source extérieure de vide ; et
- des moyens (22) de chauffage de la pièce composite (16) ;
ledit outillage étant **caractérisé en ce qu'**il comprend de plus des moyens (24) multiplicateurs de la pression appliquée sur la pièce composite (16), aptes à être interposés entre celle-ci et la vessie étanche (20).

2. Outillage selon la revendication 1, dans lequel les moyens multiplicateurs de pression comprennent un empilement d'au moins deux plaques (32) présentant des surfaces qui augmentent progressivement en allant vers la vessie (20).

3. Outillage selon la revendication 2, dans lequel les surfaces des plaques (32) les plus éloignées de l'empilement sont dans un rapport d'au moins environ un sur deux.

4. Outillage selon l'une quelconque des revendications 2 et 3, dans lequel les plaques (32) sont de préférence des clinquants plans, déformables élastiquement pour se conformer à la surface de la structure composite (10).

5. Outillage selon l'une quelconque des revendications 2 à 4, dans lequel des moyens (34,36) de guidage relatif des plaques (32) sont prévus.

6. Outillage selon la revendication 5, dans lequel les moyens de guidage comprennent au moins un pion de guidage (34) faisant saillie sur au moins l'une des plaques (32), perpendiculairement à celle-ci, au travers de trous de guidage (36) formés dans les autres plaques.

7. Outillage selon l'une quelconque des revendications 2 à 6, dans lequel la plaque (32) la plus proche de la pièce composite (16) présente une surface et une forme sensiblement identiques à celles de ladite pièce composite, au niveau de la surface (12) de la structure composite (10).

8. Outillage selon l'une quelconque des revendications précédentes, dans lequel les moyens de chauffage comprennent une couverture chauffante (22), interposée entre la vessie (20) et les moyens (24) multiplicateurs de pression.

9. Procédé de réparation sur site d'une structure composite présentant une zone endommagée, ledit procédé comprenant les étapes suivantes :
- usinage d'un évidement concave (14) dans la zone endommagée à partir d'une surface de la structure ;
- montage dans l'évidement (14) d'une pièce composite (16) non polymérisée, de forme complémentaire de celui-ci ;
- polymérisation in situ de la pièce composite (16), par mise sous vide d'une vessie (20) appliquée de façon étanche sur ladite surface de la structure composite, autour de la pièce composite (16), après interposition de moyens (24) multiplicateurs de la pression appliquée sur la pièce composite (16), entre celle-ci et la vessie (20), et chauffage de la pièce composite (16).

10. Procédé selon la revendication 9, dans lequel on interpose des moyens (24), multiplicateurs de pression comprenant un empilement d'au moins deux plaques (32) présentant des surfaces qui augmentent progressivement en allant vers la vessie (20)

11. Procédé selon la revendication 10, dans lequel on assure un guidage relatif des plaques (32) lors de la polymérisation.

12. Procédé selon l'une quelconque des revendications 9 à 11, dans lequel on chauffe la pièce composite (16) en interposant une couverture chauffante (22) entre la vessie (20) et les moyens (24) multiplicateurs de pression.

## Claims

1. Tooling (18) for on-site repairs of a composite structure (10) having a concave recess (14) previously machined in a surface (12) of structure (10), for high pressure polymerization of a non-polymerized composite part (16) with a shape that matches that of recess (14), the tooling comprising:
- a bladder (20) capable of being fastened around said composite part (16) such that it forms a leaktight seal on surface (12) of composite structure (10);
- means (28) for connecting bladder (20) to an external source of negative pressure;
- means (22) for heating composite part (16);
said tooling being **characterized in that** it also comprises:
- means (24) for increasing the pressure applied to composite part (16), said means (24) being suitable for being interposed between said composite part and bladder (20).

2. Tooling according to claim 1, wherein the means for increasing pressure comprise a stack of at least two plates (32) with surfaces that gradually increase towards the bladder (20).

3. Tooling according to claim 2, wherein the surfaces of plates (32) the furthest away from the stack are in a ratio of at least 1:2.

4. Tooling according to either of the claims 2 and 3, wherein plates (32) are preferably leaf metal planes that can be stretched to take the shape of the composite structure (10).

5. Tooling according to any of the claims 2 to 4, wherein means (34, 36) for guiding plates relative to one another (32) are provided.

6. Tooling according to claim 5, wherein the guiding means comprise at least one guiding pin (34) that projects perpendicularly out of at least one of the plates (32) through guiding holes (36) provided in the other plates.

7. Tooling according to any of the claims 2 to 6, wherein the plate (32) that is closest to composite part (16) has a surface and a shape that are more or less identical to those of said composite part at surface (12) of composite structure (10).

8. Tooling according to any of the preceding claims, wherein the heating means comprise a heating cap (22) interposed between bladder (20) and means (24) for multiplying pressure.

9. Method for on-site repair of a composite structure with a damaged zone, said method comprising the following stages:
- machining a concave recess (14) in the damaged zone in a surface of the structure;
- setting a non-polymerized composite part (16) in the recess (14), the shape of said composite part matching that of the recess;
- polymerizing the said composite part (16) in situ using a vacuum created inside a bladder (20) that is connected around composite part (16) to form a leaktight seal with said surface of the composite structure after means (24) for increasing the pressure applied to the composite part (16) have been interposed between the part and the bladder (20), and heating composite part (16).

10. Method according to claim 9, wherein means (24) for increasing pressure are interposed, said means comprising a stack of at least two plates (32) with surfaces that gradually increase towards bladder (20).

11. Method according to claim 10, wherein plates (32) are guided relative to each other during polymerization.

12. Method according to any of the claims 9 to 11, wherein the composite part (16) is heated by a heating cap (22) being interposed between the bladder (20) and the pressure increasing means (24).

## Patentansprüche

1. Werkzeug (18) zur Reparatur vor Ort einer Verbundstruktur (10), die eine konkave Ausnehmung (14) aufweist, welche vorher in eine Oberfläche (12) der Struktur (10) eingebracht wurde, für die Druckpolymerisation eines nicht-polymerisierten Verbundteils (16) in komplementärer Form zu derjenigen der Ausnehmung (14), wobei das Werkzeug umfaßt:
einen Balg bzw. eine Blase (20), der bzw. die abdichtend auf die Oberfläche (12) der Verbundstruktur (10) um das Verbundteil (16) herum angelegt werden kann,
ein Mittel (28) zum Verbinden der Blase (20) mit einer äußeren Vakuumquelle, und
Mittel (22) zum Erwärmen des Verbundteils (16),
wobei das Werkzeug **dadurch gekennzeichnet ist, daß** es ferner Druckverstärkungsmittel (24) des an das Verbundteil (16) angelegten Drucks umfaßt, die zwischen dieses und die dichte Blase (20) eingefügt werden können.

2. Werkzeug nach Anspruch 1, wobei die Druckverstärkungsmittel eine Schichtung bzw. einen Stapel mindestens zweier Platten (32) umfassen, welche Oberflächen aufweisen, die progressiv zum Balg bzw. zur Blase (20) hin zunehmen.

3. Werkzeug nach Anspruch 2, wobei die am weitesten entfernten Oberflächen der Platten (32) der Schichtung bzw. des Stapels in einem Verhältnis von mindestens etwa eins zu zwei stehen.

4. Werkzeug nach einem der Ansprüche 2 oder 3, wobei die Platten (32) vorzugsweise plane Metallplättchen sind, die elastisch verformbar sind, um sich der Oberfläche der Verbundstruktur (10) anzupassen.

5. Werkzeug nach einem der Ansprüche 2 bis 4, wobei Mittel (34, 36) zum relativen Führen der Platten (32) vorgesehen sind.

6. Werkzeug nach Anspruch 5, wobei die Führungsmittel mindestens einen Führungszapfen (34) umfassen, der über mindestens eine der Platten (32) senkrecht zu dieser durch in den anderen Platten ausgebildete Führungslöcher (36) vorspringt.

7. Werkzeug nach einem der Ansprüche 2 bis 6, wobei die dem Verbundteil (16) nächstliegende Platte (32) eine Oberfläche und eine Form aufweist, die im wesentlichen identisch mit der des Verbundteils auf der Ebene der Oberfläche (12) der Verbundstruktur (10) sind.

8. Werkzeug nach einem der vorangehenden Ansprüche, wobei die Heizmittel eine zwischen die Blase (20) und die Druckverstärkungsmittel (24) eingefügte Heizabdeckung (22) umfassen.

9. Verfahren zur Reparatur vor Ort einer Verbundstruktur mit einer beschädigten Zone, wobei das Verfahren folgende Schritte umfaßt:
Einbringen einer konkaven Ausnehmung (14) in der beschädigten Zone von einer Oberfläche der Struktur aus,
Anbringen eines nicht-polymerisierten Verbundteils (16) in der Ausnehmung (14), das von komplementärer Form zu dieser ist,
Polymerisieren des Verbundteils (16) in situ durch Evakuieren einer Blase (20), die abdichtend auf die Oberfläche der Verbundstruktur um das Verbundteil (16) herum, nach Einfügen von Druckverstärkungsmitteln (24) des an das Verbundteil (16) angelegten Drucks zwischen dieses und die Blase (20) aufgebracht wurde, und Erwärmen des Verbundteils (16).

10. Verfahren nach Anspruch 9, wobei Druckverstärkungsmittel (24) eingefügt werden, die eine Schichtung bzw. einen Stapel von mindestens zwei Platten (32) aufweisen, die zur Blase (20) hin progressiv zunehmende Oberflächen haben.

11. Verfahren nach Anspruch 10, wobei eine relative Führung der Platten (32) während der Polymerisation sichergestellt wird.

12. Verfahren nach einem der Ansprüche 9 bis 11, wobei das Verbundteil (16) erwärmt wird, indem eine Heizabdeckung (22) zwischen die Blase und die Druckverstärkungsmittel (24) eingefügt wird.
